# EUROPÄISCHE PATENTSCHRIFT

(11) **EP 0 713 806 B1**
(45) Veröffentlichungstag und Bekanntmachung des Hinweises auf die Patenterteilung: **08.04.1998**
(21) Anmeldenummer: 95116501.8
(22) Anmeldetag: 19.10.1995
(51) Int. Cl.: B60R 13/02

(54) **Verschluss-/Haltevorrichtung für ein Kfz-Verkleidungsteil**
Closure/retaining device for trimming part of a motor vehicle
Dispositif de fermeture/de retenue pour un véhicule automobile

(30) Priorität: 25.11.1994 DE 4442041
(43) Veröffentlichungstag der Anmeldung: 29.05.1996
(73) Patentinhaber: MAGNA GEORG NÄHER GmbH, 71706 Markgröningen (DE)
(72) Erfinder: Kobiela, Andreas, D-70563 Stuttgart (DE)
(74) Vertreter: Müller-Boré & Partner Patentanwälte

(56) Entgegenhaltungen:
- DE-A- 4 234 812
- US-A- 4 673 207
- US-A- 5 056 846
- US-A- 5 322 335

## Beschreibung

Die vorliegende Erfindung betrifft eine Verschluß-/Haltevorrichtung für ein Verkleidungsteil eines Kraftfahrzeuges.

Verkleidungsteile von Kraftfahrzeugen, wie z. B. Abdeckmatten für Reserveradmulden, Abdeckhauben von seitlichen Staufächern im Kofferraum, Serviceklappenöffnungen, etc. werden nach Notwendigkeit mittels Verschlußeinrichtungen an der Karosserie festgelegt. Die Verschlußeinrichtungen können beispielsweise Klettverschlüsse sein, Drehverschlüsse, bei welchen ein Bügel einen feststehenden Karosserieabschnittergreift, etc. Weiterhin sind die Verkleidungsteile häufig mit Handhabungseinrichtungen wie Griffen versehen. Das der Erfindung zugrunde liegende Problem besteht darin, eine verbesserte Verschlußvorrichtung bzw. Handhabungsvorrichtung für Verkleidungsteile von Kraftfahrzeugen anzugeben.

Dieses Problem wird erfindungsgemäß durch eine Verschluß-/Haltevorrichtung mit den Merkmalen des Anspruches 1 gelöst.

Die erfindungsgemäße Verschluß-/Haltevorrichtung weist neben einer an sich bekannten Verschlußeinrichtung, mittels welcher das Verkleidungsteil in einer Verkleidungsstellung, insbesondere an einem Karosserieabschnitt des Kraftfahrzeuges festlegbar ist, eine Halteeinrichtung auf. Die Halteeinrichtung dient dazu, das Verkleidungsteil in einer Entkleidungsstellung zu halten, also beispielsweise die Abdeckmatte für ein Reserverad selbständig zu halten, so daß eine Entnahme des Reserverades durch eine Person mit beiden Händen ermöglicht ist.

Die Halteeinrichtung kann gegebenenfalls auch ohne Verschlußeinrichtung vorgesehen werden, so daß die erfindungsgemäße Vorrichtung dann alleine eine Haltefunktion ausüben kann (beispielsweise bei den bereits oben erwähnten Abdeckmatten für Reserveradmulden ist in aller Regel keine aktive Festlegung an der Karosserie notwendig, da diese Matte durch die Schwerkraft an Ort und Stelle gehalten wird).

Die erfindungsgemäße Verschluß-/Haltevorrichtung ist jedoch insbesondere in ihrer Kombination von Verschlußeinrichtung und Halteeinrichtung wertvoll. Denn die kombinierte Verschluß-/Haltevorrichtung kann überall dort verwendet werden, wo lediglich eine Verschlußfunktion, lediglich eine Haltefunktion oder aber eine Verschlußfunktion als auch eine Haltefunktion notwendig ist/sind. Hierdurch werden Werkzeugkosten gespart, die Logistik und die Lagerhaltung vereinfachen sich. Dies ist gerade in Zeiten hohen Wettbewerbs von Automobilzulieferfirmen von Vorteil.

Bevorzugt weist die Vorrichtung weiterhin eine Griffeinrichtung auf, mittels welcher die Verschlußeinrichtung und/oder die Halteeinrichtung betätigbar ist/sind. Gemäß dieser bevorzugten Ausführungsform erfüllt die Verschluß/Haltevorrichtung drei Aufgaben gleichzeitig, für welche bislang mindestens zwei, üblicherweise jedoch drei verschiedene Vorrichtungen notwendig waren. Die Griffeinrichtung kann gegebenenfalls auch alleine dazu verwendet werden, das Verkleidungsteil zu handhaben.

Gemäß einer besonders bevorzugten Ausführungsform weist die Vorrichtung zwei Elemente auf, von denen ein erstes Element an dem Verkleidungsteil festlegbar ist und von denen das zweite Element an dem ersten Element beweglich gelagert ist. Das erste Element wird im folgenden mit Rahmen und das zweite Element mit Deckel bezeichnet, ohne daß dies jedoch einschränkend zu werten wäre. Durch bewegliche Lagerung des Deckels an dem Rahmen können die oben erwähnten drei Grundfunktionen der erfindungsgemäßen Verschluß-/Haltevorrichtung mit großer Flexibilität erfüllt werden. Durch die Festlegung des Rahmens an dem Verkleidungsteil ist gewährleistet, daß unabhängig von der Relativlage zwischen Rahmen und Deckel immer auch eine direkte Wirkverbindung zwischen Deckel und Verkleidungsteil gegeben ist. Darüberhinaus ist bei der bevorzugten Beschränkung auf zwei Elemente der weitere Vorteil offensichtlich, daß die Gesamtzahl von zur Erfüllung der obigen Funktionskomplexe relativ gesehen klein ist.

Mit Vorteil ist der Deckel, also das gegenüber dem Rahmen und damit dem Verkleidungsteil bewegbare Element, mit der Griffeinrichtung versehen. Die Griffeinrichtung besteht im konstruktiv einfachsten Falle in einer oder mehreren Ausnehmungen in dem Deckel. Hierdurch ergibt sich eine flexible Handhabung der erfindungsgemäßen Verschluß-/Haltevorrichtung. Mit anderen Worten kann der Benutzer die Vorrichtung größtenteils entkoppelt von der Lage des Verkleidungsteiles, also ergonomisch günstig handhaben.

Es ist weiterhin von Vorzug, wenn die Halteeinrichtung an dem Deckel ausgebildet ist. Die Realisierung der erfindungsgemäßen Haltefunktion erfolgt dann durch Verbindung des Deckels mit einem beliebigen, vorzugsweise jedoch mit einem bestimmten Karosserieabschnitt. Der Karosserieabschnitt sollte so gewählt sein, daß eine Verbindung mit dem Deckel einfach realisierbar ist, wobei die Abmessungen des Verkleidungsteiles zu berücksichtigen sind.

Vorzugsweise sind die zwei Elemente, also Deckel und Rahmen, gegeneinander verriegelbar. Der Rahmen und der Deckel sind mit anderen Worten mittels geeigneter Verriegelungseinrichtungen in eine feste Relativlage zueinander bringbar, aus welcher sie sich nicht unabsichtlich lösen können.

Die Verriegelbarkeit wird bevorzugt dadurch gelöst, daß der Deckel an dem Rahmen drehbar und gleitbar gelagert ist und bei einer gleitenden Bewegung entlang des Rahmens je nach Richtung mit diesem verriegelt bzw. von diesem entriegelt wird. Hierdurch ist gewährleistet< daß Deckel und Rahmen in der Verriegelungsstellung miteinander fluchten, was insgesamt zu einer geringen Bauhöhe beiträgt.

Vorzugweise ist zur Verriegelung der Deckel mit einer Schnappnase versehen, welche in der Verriegelungsstellung an einem Abschnitt des Rahmens einschnappt. Der Abschnitt des Rahmens kann beispielsweise eine Außenkante, eine Durchbrechung oder eine Vertiefung sein.

Gemäß einer besonders bevorzugten Ausführungsform ist der Rahmen aus einem flachen klappbaren Materialstück hergestellt und wird zum Festlegen an dem Verkleidungsteil auf dieses geklappt. Mit anderen Worten umgibt der Rahmen das Verkleidungsteil "U-förmig". Diese Ausgestaltung hat zum einen den Vorteil, daß die Lagerung des Rahmens vor Festlegung an dem Verkleidungsteil nur wenig Raum benötigt. Zum anderen läßt sich auf diese Weise die Festlegung an dem Verkleidungsteil konstruktiv relativ einfach bewerkstelligen. Vorzugsweise weist der Rahmen hierzu an der dem durch das Zusammenklappen definierten raumzugewandten Seite ineinander greiffähige Schnappvorsprünge auf. Das Verkleidungsteil wird üblicherweise vor Festlegung des Rahmens mit Durchbrechungen versehen, deren Lage der der Schnappvorsprünge entspricht. Somit durchdringen die Schnappvorsprünge das Verkleidungsteil, wenn der Rahmen auf dieses geklappt wird und verbinden die beiden Seiten des Rahmens auf konstruktiv einfache Weise.

Mit Vorteil ist der Rahmen mit einer Aussparung versehen, in welcher der Deckel aufnehmbar ist. Durch diese Ausgestaltung wird erreicht, daß der Deckel nicht gegenüber dem Rahmen vorsteht, wenn er in der Aussparung aufgenommen ist. Hierdurch wird eine möglichst ebene Oberfläche der Vorrichtung erzielt, die gerade bei Anwendung der Verschluß-/Haltevorrichtung im Bereich des Kofferraumbodens dazu beiträgt, daß dieser möglichst eben ist. Weiterhin erzielt man durch diese Maßnahme ein besonders ästhetisches Aussehen der erfindungsgemäßen Verschluß-/Haltevorrichtung.

Es ist von besonderem Vorzug, den Deckel zur beweglichen Lagerung an dem Rahmen mit Zapfen zu versehen. Diese Zapfen können einerseits in Lagern geführt sein, welche hierfür speziell an dem Rahmen angeformt sind. Besonders bevorzugt werden die Zapfen jedoch in dem Raum geführt, welcher durch das Zusammenklappen des Rahmens definiert ist. Hierdurch kann insbesondere erreicht werden, daß sich der Rahmen besonders einfach herstellen läßt. Z. B. bei Herstellung im Spritzgußverfahren sind keine seitlichen Schieber, etc. zur Bereitstellung einer Lochaufnahme o. ä. notwendig.

Gemäß einer bevorzugten Ausgestaltung ist der Rahmen an der Seite mit Rippen versehen, welche dem Raum zugewandt ist, welcher durch das Zusammenklappen des Rahmens definiert ist. Die Rippen sind so ausgebildet, daß sie Anschläge für die Zapfen des Deckels darstellen und dadurch die gleitende Bewegung des Deckels entlang des Rahmens begrenzen. Mit anderen Worten wird der Rahmen an der dem durch das Zusammenklappen definierten Raum zugewandten Seite derart ausgebildet, daß nach dem Zusammenklappen für die Deckelzapfen jeweils eine Art Langloch entsteht, entlang welcher der Deckel gegenüber dem Rahmen verschiebbar ist.

Gemäß einer weiteren bevorzugten Ausführungsform ist an dem Rahmen im Bereich der Aussparung für den Deckel eine Abstützungseinrichtung vorgesehen. Mittels dieser Abstützungseinrichtung ist es möglich, die Drehbewegung des Deckels an dem Rahmen zu begrenzen. Die Abstützungseinrichtung ist mit anderen Worten so ausgebildet, daß vermieden wird, daß der Deckel in den durch das Zusammenklappen des Rahmens definierten Raum schwenkt. Wie noch später erläutert werden wird, hat diese Abstützungseinrichtung darüberhinaus in Verbindung mit anderen kostruktiven Maßnahmen den Vorteil, daß sie eine Vormontage des Deckels an dem Rahmen unterstützt.

Gemäß einer bevorzugten Ausführungsform ist die Verschlußeinrichtung in Form wenigstens eines Vorsprungs ausgebildet, welcher an der erfindungsgemäßen Verschluß-/Haltevorrichtung angeordnet und ausgelegt ist, einen feststehenden Karosserieabschnitt (beispielsweise einen an der Karosserie angeschweißten Bügel) zu hintergreifen. Im folgenden wird für den feststehenden Karosserieabschnitt generell der Begriff "Bügel" verwendet, ohne daß dies als eine Einschränkung zu verstehen ist.

Vorzugsweise ist dabei der Vorsprung an dem Deckel ausgebildet und hintergreift den Bügel besonders bevorzugterweise bei der gleitenden Bewegung des Deckels entlang des Rahmens. Diese Ausführungsform ist von besonderem Vorzug, wenn bei der gleitenden Bewegung des Deckels entlang des Rahmens zum einen der Bügel hintergriffen, zum anderen aber in der Endstellung der Deckel mit dem Rahmen verriegelt wird. Somit werden mit einem Arbeitsvorgang zwei Funktionen erfüllt, nämlich das Festlegen an dem Karosserieabschnitt sowie die Verriegelung des Deckels an dem Rahmen, so daß das Verkleidungsteil auch bei den im Auto unvermeidlichen Rüttelbewegungen sicher an dem Karosserieabschnitt des Kraftfahrzeuges festlegbar ist.

Gemäß einer weiteren bevorzugten Ausführungsform weist die Halteeinrichtung einen Haken auf, welcher an einem Karosserieabschnitt einhakbar ist, so daß das Verkleidungsteil in einer Entkleidungsstellung gehalten ist. Durch das Einhaken an einem Karosserieabschnitt (z. B. an der die Kofferraumöffnung umgebenden Regenrinne) wird das Verkleidungsteil in einer Stellung gehalten, die einen Zugriff auf das, was ansonsten zu verkleiden ist, ermöglicht. Das Verkleidungsteil kann also beispielsweise ein die Reserveradmulde abdeckende Matte sein. Diese besonders bevorzugte Ausführungsform ist jedoch auch auf sog. "Serviceklappen" anwendbar, die dazu verwendet werden, einen Zugang z. B. zu elektrischen Leitungssträngen/Kabelbaumverbindern z. B. zu Diagnosezwecken an anderweitig unzugänglichen Orten zu ermöglichen. Diese Serviceklappen können überall im Auto angeordnet sein, so daß der Ort des "Einhakens" je nach Lage der Serviceklappe entsprechend zu wählen ist. Gegebenenfalls können hierfür sogar konstruktiv allein für diesen Zweck bestimmte Ösen oder Laschen vorgesehen werden, in welche die Halteeinrichtung einhakbar ist. Weiterhin ist diese erfindungsgemäß Ausgestaltung auch auf die seitlichen Stauklappen in Kfz-Kofferräumen anwendbar.

Neben der bevorzugten Realisierung der erfindungsgemäßen Halteeinrichtung mittels eines Hakens ist es natürlich auch möglich, die Halteeinrichtung beispielsweise durch einen entsprechenden Klettverschluß, durch Magnete, etc. auszubilden. Vorzugsweise ist der Haken an dem Deckel angeordnet. Da der Deckel bewegbar an dem Rahmen gelagert ist, ergibt sich eine weitgehend flexible Handhabung der erfindungsgemäßen Vorrichtung beim Einhaken an einem Karosserieabschnitt. Dies gilt natürlich insbesondere, wenn der Deckel mit der Griffeinrichtung versehen ist.

Besonders bevorzugterweise werden der Rahmen und der Deckel aus Kunststoff im Spritzgußverfahren hergestellt. Mit Vorteil wird an dem Rahmen zum Zwecke des Zusammenklappens ein Filmschnarnier ausgebildet. Da der Rahmen im auf das Verkleidungsteil geklappten Zustand im Querschnitt im wesentlichen U-förmig ist, wäre es auch denkbar, zwei Filmscharniere (an beiden Ecken des U) vorzusehen. Das Vorsehen nur eines Filmscharnieres ist jedoch bevorzugt, da durch diese Maßnahme die Stabilität des Rahmens insgesamt besser ist.

Gemäß einer besonders bevorzugten Ausführungsform sind der Rahmen und der Deckel in einem vormontierten Zustand lieferbar. D. h., daß trotz der bevorzugten Zweiteiligkeit der erfindungsgemäßen Verschluß-/Haltevorrichtung logistisch nur ein Teil zu verwalten ist. Besonders bevorzugterweise erfolgt die Vormontage mittels der Maßnahmen, die beim erfindungsgemäßen Gebrauch der Vorrichtung dazu dienen, den Deckel an dem Rahmen zu verriegeln. Mit anderen Worten werden der Rahmen und der Deckel im verriegelten Zustand geliefert, und zwar vorzugsweise bei aufgeklapptem Rahmen. Zur Montage der erfindungsgemäßen Vorrichtung an dem Verkleidungsteil ist es lediglich notwendig, den Rahmen auf das Vekleidungsteil zu klappen unter Einschnappen der an dem Rahmen vorgesehenen Schnappvorsprünge. Direkt am Anschluß hieran ist die erfindungsgemäße Vorrichtung sofort gebrauchsfertig, d. h. der Deckel kann zum Gebrauch entriegelt werden.

Die Verwendung der erfindungsgemäßen Verschluß-/Haltevorrichtung ist nicht auf Verkleidungsteile für Kraftfahrzeuge beschränkt, sondern kann bei jeder Art von Verkleidungselement Anwendung finden.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung.
- Fig. 1: zeigt eine schematische perspektivische Ansicht einer ersten Ausführungsform der erfindungsgemäßen Verschluß-/Haltevorrichtung;
- Fig. 2: zeigt eine der Fig. 1 ähnliche Ansicht, jedoch mit aufgeklapptem Deckel;
- Fig. 3: ist eine schematische Schnittansicht entlang der Linie A-A in Fig. 1;
- Fig. 4: ist eine schematische Schnittansicht entlang der Linie B-B in Fig. 1;
- Fig. 5: ist eine schematische Teilschnittansicht des Rahmens;
- Fig. 6: ist eine schematische Schnittansicht entlang der Linie C-C in Fig. 5 einschließlich einer zusätzlichen schematischen perspektivischen Ansicht eines Deckelzapfens;
- Fig. 7: ist eine schematische perspektivische Ansicht eines Anwendungsbeispieles der ersten Ausführungsform;
- Fig. 8: ist eine Ansicht der ersten Ausführungsform in der Anwendung gemäß Fig. 7 mit aufgeklapptem und eingehaktem Deckel;
- Fig. 9: ist eine schematische perspektivische Ansicht einer zweiten Ausführungsform der erfindungsgemäßen Verschluß-/Haltevorrichtung in einer zu Fig. 2 entsprechenden Stellung;
- Fig. 10: ist eine schematische perspektivische Ansicht eines Anwendungsbeispieles für die zweite Ausführungsform der erfindungsgemäßen Verschluß-/Haltevorrichtung;
- Fig. 11: ist eine schematische Schnittansicht der zweiten Ausführungsform entlang der Linie D-D von Fig. 10.

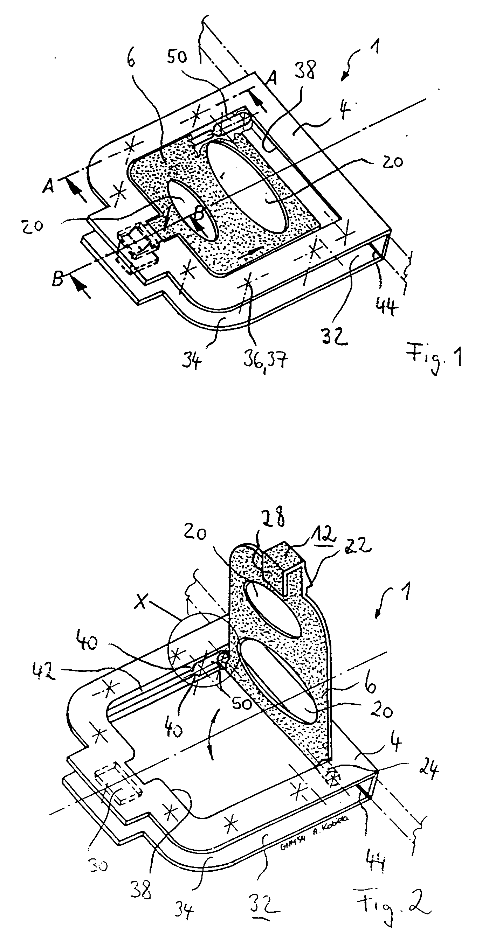

Unter Bezugnahme auf die Fig. 1 - 6 wird nachstehend eine erste Ausführungsform der erfindungsgemäßen Verschluß-/Haltevorrichtung 1 erläutert.

Die Verschluß-/Haltevorrichtung 1 besteht aus einem Rahmen 4 und einem bewegbar an diesem Rahmen 4 gelagerten Deckel 6. Der Rahmen 4 und der Deckel 6 bestehen jeweils aus einem flachen Kunststoffmaterialstück, welches im Spritzgußverfahren hergestellt ist. Der Rahmen 4 weist ein sich in Querrichtung erstreckendes Filmscharnier 44 auf, mittels wessen die beiden durch das Filmscharnier 44 getrennten Abschnitte um etwa 180° aufeinander geklappt werden können. Der eine von den durch das Filmscharnier 44 getrennten Abschnitten (im Folgenden mit oberer Abschnitt bezeichnet) ist im wesentlichen L-förmig ausgestaltet, so daß der Rahmen 4 nach dem Zusammenklappen im Querschnitt im wesentlichen eine U-Form aufweist. Die L-Form des oberen Abschnittes ist so bemessen, daß der durch das Zusammenklappen entstehende Raum 32 zwischen oberem und unterem Abschnitt des Rahmens 4 generell geeignet ist zur Aufnahme eines Verkleidungsteiles eines Kraftfahrzeuges.

Der obere Abschnitt des Rahmens 4 ist mit einer zentralen Aussparung 38 versehen, welche zur Aufnahme des Deckels 6 dient.

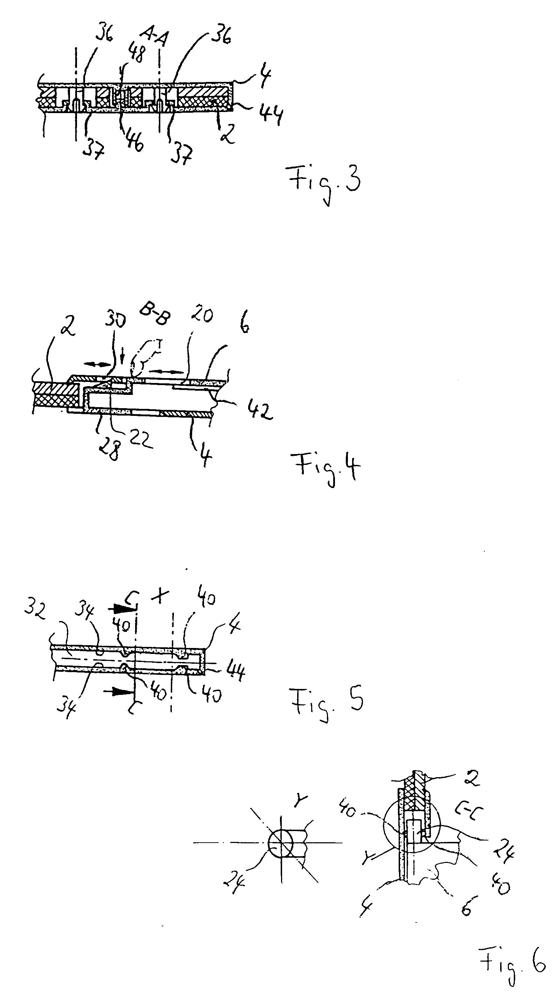

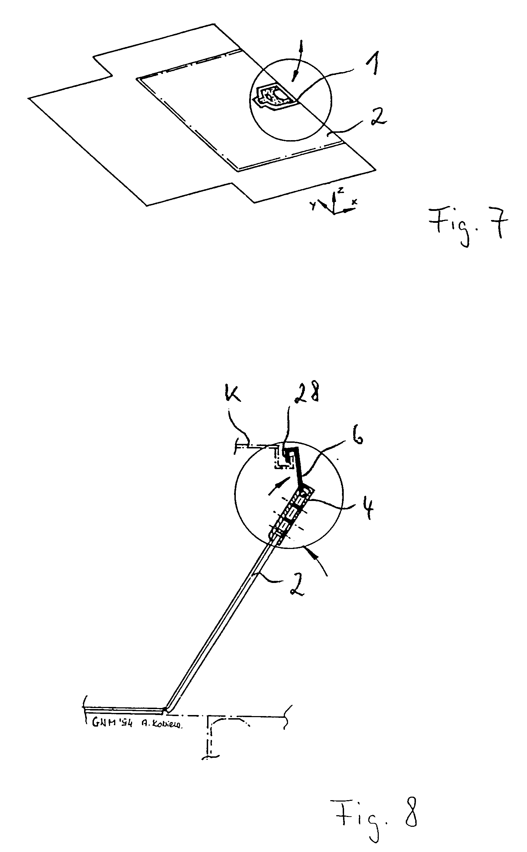

Der Rahmen 4 ist an der dem durch das Zusammenklappen definierten Raum 32 zugewandten Seite 34 mit ineinander greiffähigen Schnappvorsprüngen 36, 37 versehen. Die generelle Lage der Schnappvorsprünge 36, 37 ist beispielhaft in Fig. 1 angedeutet. Die Schnappvorsprünge 36, 37 befinden sich im Bereich des Steges, welcher nach dem Vorsehen der Aussparung 38 von dem oberen Abschnitt des Rahmens 4 stehengeblieben ist. Wie es insbesondere aus Fig. 3 zu ersehen ist, ist der obere Abschnitt des Rahmens 4 an der dem Raum 32 zugewandten Seite mit Schnappvorsprüngen 36 in der Form von Zapfen mit erweitertem Kopf ausgebildet. Die dem Raum 32 zugewandte Seite 34 des Rahmens 4 ist an dem unteren Abschnitt des Rahmens 4 mit Schnappvorsprüngen 37 in Form von Aufnahmen versehen, welche geeignet sind, den erweiterten Kopf der Schnappvorsprünge 36 aufzunehmen und hierdurch den oberen Abschnitt und den unteren Abschnitt des Rahmens 4 gegeneinander zu verriegeln.

In Fig. 3 ist weiterhin ein Führungsbolzen 46 gezeigt, welcher von der Seite 34 des unteren Abschnittes des Rahmens 4 vorsteht und beim Zusammenklappen des Rahmens in einen entsprechenden Ansatz 48 geführt wird und hierdurch eine relative Fixierung zwischen oberem und unterem Abschnitt des Rahmens 4 bewirkt.

An den für die Schnappvorsprünge 36, 37 sowie den Führungsbolzen 46 und den Ansatz 48 vorgesehenen Orten wird das Verkleidungsteil 2 vor Montage der Verschluß-/Haltevorrichtung 1 mit Durchbrechungen versehen. Die genaue Fixierung des Rahmens 4 an dem Verkleidungsteil 2 erfolgt, indem das Verkleidungsteil 2 zwischen dem oberen und dem unteren Abschnitt des Rahmens 4 eingeklemmt wird und/oder mittels der Form der in dem Verkleidungsteil 2 vorgesehenen Durchbrechungen zur Aufnahme der Schnappvorsprünge 36, 37 bzw. des Führungsbolzens 46 und des Ansatzes 48.

Der Rahmen 4 ist an seinem oberen und an seinem unteren Abschnitt an jeweils der dem Raum 32 zugewandten Seite 34 im hinteren, dem Filmscharnier 44 benachbarten Bereich mit in Längsrichtung versetzt angeordneten Rippen 40 bzw. Vorsprüngen versehen. Die Rippen 40 bilden nach dem Zusammenklappen des Rahmens 4 in dem Raum 32 seitlich jeweils ein Langloch aus, welches zur dreh- und längsbeweglichen Lagerung von Zapfen geeignet ist.

Der Deckel 6 ist mit seitlich vorstehenden Zapfen 24 versehen, welche in den an dem Rahmen 4 nach dem Zusammenklappen ausgebildeten Langlöcher 50 führbar sind. Durch das Zusammenwirken der Zapfen 24 und der Langlöcher 50 ist der Deckel 6 drehbar und gleitbar bzw. in Längsrichtung verschiebbar an dem Rahmen 4 gelagert.

Der Deckel 6 ist an der den Zapfen 24 gegenüberliegenden Kante mit einem Vorsprung ausgebildet, auf dessen Oberseite sich eine Schnappnase 22 befindet. Die Unterseite des Vorsprungs ist als Haken 28 ausgebildet, welcher zurück in Richtung auf die Zapfen 24 abgebogen ist und bei dieser Ausführungsform als Halteeinrichtung 12 dient.

Der Deckel 6 und die entsprechende Aussparung 38 in dem oberen Abschnitt des Rahmens 4 sind so geformt, daß der Deckel 6 gerade in die Aussparung 38 klappbar ist, wenn die Zapfen 24 in der hinteren Position der Langlöcher 50 sind.

An dem Rahmen 4 sind im Bereich der Aussparung 38 seitlich Abstützeinrichtungen 42 in Form von Stegen ausgebildet, welche verhindern, daß der Deckel 6 durch die Aussparung 38 in den Raum 32 "fällt". Die Abstützeinrichtungen 42 sind so geformt, daß der Deckel in einer Stellung in der Ausnehmung 38 gehalten wird, in welcher seine Oberseite mit der Oberseite des oberen Abschnittes des Rahmens 4 fluchtet.

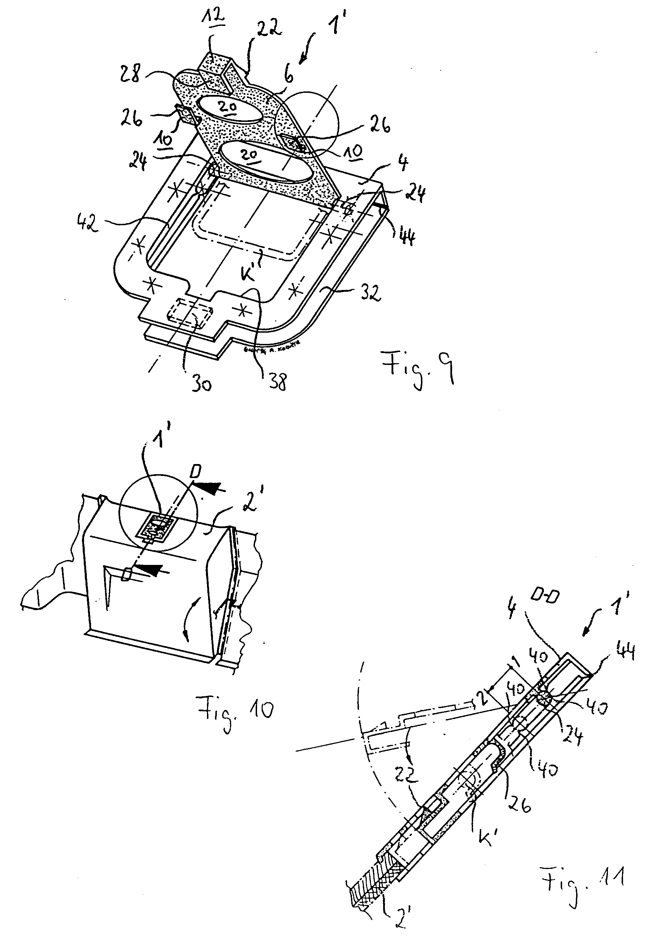

Der mit der Schnappnase 22 versehene Vorsprung des Deckels 6 ist (was in Fig. 4, nicht jedoch in Fig. 2 dargestellt ist) nach unten abgekragt. Wenn der Deckel 6 in die Aussparung 38 geklappt ist und durch die Abstützeinrichtungen 42 in der oben beschriebenen Lage gehalten ist, ist es möglich, den Deckel in Längsrichtung nach vorne zu verschieben, wobei die Zapfen 24 entlang der Langlöcher 50 geführt werden. Gleichzeitig greift der die Schnappnase 22 aufweisende Vorsprung des Deckels 6 hinter die Unterseite des oberen Abschnittes des Rahmens 4. An dem vorderen Abschnitt des oberen Abschnittes des Rahmens ist eine Vertiefung (wie in Fig. 2 dargestellt) oder eine Durchbrechung (wie in Fig. 4 dargestellt) mit der Bezugsziffer 30 vorgesehen. Wenn der Deckel 6 ganz nach vorne geschoben ist, also in der vorderen Endstellung der Zapfen 24 in den Langlöchern 50, schnappt die Schnappnase 22 in die Vertiefung bzw. Durchbrechung 30 und verriegelt somit den Deckel 6 mit dem Rahmen 4.

Zur gleitenden Bewegung des Deckels 6 entlang des Rahmens 4 ist der Deckel 6 mit zwei Ausnehmungen 20 versehen, welche als Griff dienen.

In Fig. 7 und 8 ist ein bevorzugter Anwendungsfall der ersten Ausführungsform der erfindungsgemäßen Verschluß-/Haltevorrichtung 1 dargestellt.

Fig. 7 zeigt schematisch den mit einer Verkleidung ausgelegten Bodens eines Kfz-Kofferraums. Die Verkleidung ist mit einem Verkleidungsteil 2 in Form einer am übrigen Teil der Verkleidung angelenkten und gegenüber dieser abhebbaren Abdeckmatte versehen. Das Verkleidungsteil 2 in Form der Abdeckmatte ist mit der ersten Ausführungsform der erfindungsgemäßen Verschluß-/Haltevorrichtung 1 versehen.

Im Normalzustand, welcher in Fig. 7 gezeigt ist, ist der Deckel 6 mit dem Rahmen 4 verriegelt, wobei die Schnappnase 22 in die Vertiefung bzw. Durchbrechung 30 greift. Eine Verschlußfunktion wird durch die Verschluß-/Haltevorrichtung bei dieser Ausführungsform nicht ausgeübt. Es ist nicht notwendig, das Verkleidungsteil 2 an der Karosserie festzulegen, da es durch die Schwerkraft an Ort und Stelle bleibt.

Falls nun ein Benutzer auf eine unter dem Verkleidungsteil 2 verborgene Mulde, beispielsweise zur Aufnahme einer Reserverades, zugreifen möchte, drückt er zunächst auf den Deckel, um die Verriegelung der Schnappnase 22 in der Vertiefung bzw. Durchbrechung 30 zu lösen und schiebt den Deckel 6 gleichzeitig gegenüber dem Rahmen nach hinten, wobei die Zapfen 24 in den Langlöchern 50 geführt werden. In der Endposition läßt sich der Deckel 6 gegenüber dem oberen Abschnitt des Rahmens 4 hochklappen, wozu er in der Regel an den Ausnehmungen 20 ergriffen wird. Anschließend wird der Deckel, und somit das Verkleidungsteil 2, abgehoben und schließlich mit dem Haken 28 an dem Vorsprung des Deckels 6 in einen Karosserieabschnitt K eingehakt. Der Karosserieabschnitt K kann beispielsweise durch die um die Öffnung des Kofferraums umlaufende Regenrinne gebildet sein. Es ist aber auch möglich, den Haken an einem geeigneten Vorsprung oder einer Öse innerhalb des Kofferraumes oder an der Innenseite der Kofferraumklappe festzulegen. Das Verkleidungsteil 2 wird hierdurch in der abgehobenen Stellung gehalten, so daß der Benutzer beide Hände frei hat, um beispielsweise ein Reserverad aus der Kofferraummulde zu heben.

Falls ein Zugriff auf die Mulde unterhalb des Kofferraumes nicht mehr notwendig ist, wird der Haken 28 des Deckels 6 wieder ausgehakt, das Verkleidungsteil 2 wieder in die Ausgangsstellung gebracht, der Deckel 6 in die Aussparung 38 des Rahmens 4 geklappt und durch gleitende Bewegung entlang des Rahmens 4 durch das Zusammenwirken von Schnappnase 22 und Vertiefung bzw. Durchbrechung 30 verriegelt.

Diese erste bevorzugte Ausführungsform der Erfindung weist lediglich eine Halteeinrichtung in Form eines Hakens 28 auf. Eine Verschlußeinrichtung zur Festlegung des Verkleidungsteiles in einer Verkleidungsstellung an einem Karosserieabschnitt des Kraftfahrzeuges ist bei dieser Ausführungsform nicht vorgesehen.

In Fig. 9 ist eine zweite Ausführungsform einer erfindungsgemäßen Verschluß-/Haltevorrichtung 1' gezeigt.

Die Verschluß-/Haltevorrichtung 1' entspricht in ihrem Aufbau weitgehend der zuvor beschriebenen Verschluß-/Haltevorrichtung 1 gemäß der ersten Ausführungsform. Zusätzlich sind jedoch an der Unterseite des Deckels 6 zwei Vorsprünge 26 mit hakenförmiger Gestalt vorgesehen.

Die Vorsprünge 26 dienen als Verschlußeinrichtung 10. Die Vorsprünge 26 sind geeignet, während der gleitenden Bewegung des Deckels 6 entlang des Rahmens 4 in Richtung Verriegelungsstellung einen Karosserieabschnitt K', beispielsweise in Form eines Bügels zu hintergreifen. In der Verriegelungsstellung zwischen Deckel 6 und Rahmen 4 wird die Verschluß-/Haltevorrichtung somit an dem Bügel K' festgelegt.

In Fig. 10 ist ein Anwendungsbeispiel der zweiten Ausführungsform 1' der Erfindung gezeigt. Die Verschluß-/Haltevorrichtung 1' ist an einem Verkleidungsteil 2' in Form einer seitlichen Kofferraumfachabdeckung angebracht. In der Verkleidendungsstellung des Verkleidungsteils 2' liegt unterhalb der Verschluß-/Haltevorrichtung 1' ein Bügel K' (in Fig. 10 nicht dargestellt).

Die Funktionsweise dieser zweiten Ausführungsform 1' der Erfindung wird nachstehend insbesondere unter Bezugnahme auf Fig. 11 beschrieben, welche eine schematische Schnittansicht entlang der Linie D-D in Fig. 10 ist.

In der Verkleidungsstellung des Verkleidungsteils 2' ist der Deckel 6 mit dem Rahmen 4 mittels der Schnappnase und der Vertiefung bzw. Durchbrechung 30 verriegelt. In dieser Stellung hintergreifen die Vorsprünge 26 den unterhalb der Vorrichtung 1' liegenden Bügel K', welcher fest mit der Karosserie des Kraftfahrzeuges verbunden ist. Somit wird das Verkleidungsteil 2' fest in der verkleidenden Position gehalten. Durch die Verriegelung zwischen Deckel 6 und Rahmen 4 wird sich das Verkleidungsteil 2' auch bei den in Kraftfahrzeugen unvermeidlichen Rüttelbewegungen nicht von dem Bügel K' lösen.

Zur Abnahme des Verkleidungsteils 2' ist es lediglich notwendig, den Deckel 6 zunächst leicht niederzudrücken, um die Verriegelung der Schnappnase 22 von der Vertiefung bzw. Durchbrechung 30 zu lösen, und den Deckel 6 anschließend nach hinten zu schieben, so daß er aus der Aussparung 38 herausgeklappt werden kann. Durch Greifen der Ausnehmungen 20 in dem Deckel 6 kann das Verkleidungsteil 2' nun in jede beliebige Position gebracht werden. Mittels des auch bei dieser Ausführungsform vorhandenen Hakens 28 am vorderen Abschnitt des Deckels 6 ist es natürlich auch möglich, das Verkleidungsteil 2' an einem beliebigen, insbesondere jedoch an einem dafür vorgesehenen Karosserieabschnittes des Kraftfahrzeuges einzuhängen. Dabei kann das Verkleidungsteil 2' durchaus ganz abgehoben werden, so daß es im Gegensatz zum Anwendungsbeispiel bei der ersten Ausführungsform, keine Verbindung zu der es sonst umgebenden Verkleidung mehr hat.

Wie aus der obigen Beschreibung zu entnehmen ist, ist der Rahmen 4 bei der ersten und bei der zweiten Ausführungsform identisch. Lediglich der Deckel 6 unterscheidet sich dahingehend, daß bei der zweiten Ausführungsform zusätzlich die Vorsprünge 26 vorgesehen sind. Hieraus ist leicht zu ersehen, daß die erfindungsgemäße Verschluß-/Haltevorrichtung leicht durch verschiedene Arten von Deckeln an unterschiedliche Funktionen angepaßt werden kann, wobei auch die Gestalt und Anordnung der Verschlußeinrichtung 10 und der Halteeinrichtung 12, also des Hakens 28 bzw. der Vorsprünge 26 variieren kann. Falls jedoch den logistischen Gesichtspunkten mehr Beachtung geschenkt werden soll, so wird für alle Anwendungsfälle nur ein einziger Deckeltyp vorgesehen. Dies würde bedeuten, daß auch bei dem ersten Anwendungsbeispiel (Kofferraummatte] ein Deckel mit Vorsprüngen 26 vorhanden wäre, obwohl die Vorsprünge 26 bei der ersten Anwendung gar nicht gebraucht würden. Andererseits wird bei dem zweiten Anwendungsbeispiel (seitliche Kofferraumfachabdeckung) die Haltefunktion mittels des Hakens 28 nicht unbedingt benötigt. Dennoch hat der Deckel 6 der zweiten Ausführungsform der Verschluß-/Haltevorrichtung 1' den vorderseitigen Haken 28.

Die beschriebenen Ausführungsformen sind mittels des Spritzgußverfahrens leicht und kostengünstig herstellbar, haben nur ein geringes Gewicht bei hoher Stabilität und können raumsparend transportiert und gelagert werden. Vorzugsweise wird die erfindungsgemäße Verschluß-/Haltevorrichtung in einem vormontierten Zustand geliefert. D. h. der Rahmen 4 wird, vorzugsweise im aufgeklappten Zustand, mit dem Deckel 6 versehen und die Teile werden gegeneinander verriegelt. Dabei stützt sich der Deckel 6 zum einen mittels seiner Zapfen 24 an dem Rahmenabschnitt zwischen den Rippen 40, zum zweiten an den Abstützeinrichtungen 42 des Rahmens und zum dritten mit der Schnappnase 22 in der Vertiefung bzw. Durchbrechung 30 des Rahmens 4 ab. Durch diese Art von Dreipunktlagerung wird der Deckel 6 sicher am Rahmen 4 in dem vormontierten Zustand gehalten. Die Vormontagestellung entspricht dabei der beim erfindungsgemäßen Gebrauch verwirklichten Verriegelungsstellung zwischen Deckel 6 und Rahmen 4.

## Patentansprüche

1. Verschluß-/Haltevorrichtung (1; 1') für ein Verkleidungsteil (2; 2') eines Kraftfahrzeuges, mit
- einer Verschlußeinrichtung (10), mittels welcher das Verkleidungsteil (2) in einer Verkleidungsstellung an einem Karosserieabschnitt (K) des Kraftfahrzeuges festlegbar ist, und
- einer Halteeinrichtung (12), mittels welcher das Verkleidungsteil (2) in einer Entkleidungsstellung, insbesondere von einem Karosserieabschnitt (K) des Kraftfahrzeuges abgehobenen Stellung gehalten werden kann.

2. Vorrichtung nach Anspruch 1, wobei die Vorrichtung weiterhin eine Griffeinrichtung (20) aufweist, mittels welcher die Verschlußeinrichtung (10) und/oder die Halteeinrichtung betätigbar ist/sind.

3. Vorrichtung nach Anspruch 1 oder 2, wobei die Vorrichtung zwei Elemente (4; 6) aufweist,
- von denen ein erstes Element (4) (Rahmen) an dem Verkleidungsteil (2; 2') festlegbar ist, und
- von denen das zweite Element (6) (Deckel) an dem Rahmen (4) bewegbar gelagert ist.

4. Vorrichtung nach Anspruch 3, wobei der Deckel (6) mit der Griffeinrichtung versehen ist, vorzugsweise in Form wenigstens einer Ausnehmung (20).

5. Vorrichtung nach Anspruch 3 oder 4, wobei die Halteeinrichtung (12) an dem Deckel (6) derart ausgebildet ist, daß dieser mit einem Karosserieabschnitt (K) verbindbar ist.

6. Vorrichtung nach einem der Ansprüche 3 bis 5, wobei die zwei Elemente (4, 6) gegeneinander verriegelbar sind.

7. Vorrichtung nach Anspruch 6, wobei der Deckel (6) an dem Rahmen (4) drehbar und gleitbar gelagert ist und bei einer gleitenden Bewegung entlang des Rahmens (4) mit diesem verriegelt bzw. von diesem entriegelt wird.

8. Vorrichtung nach Anspruch 7, wobei an dem Deckel (6) eine Schnappnase (22) vorgesehen ist, welche in der Verriegelungsstellung an einem Abschnitt (30) des Rahmens (4) einschnappt.

9. Vorrichtung nach einem der Ansprüche 3 bis 8, wobei der Rahmen (4) aus einem flachen klappbaren Materialstück hergestellt ist und zum Festlegen an dem Verkleidungsteil (K; K') auf dieses geklappt wird.

10. Vorrichtung nach Anspruch 9, wobei der Rahmen (4) an der dem durch das Zusammenklappen definierten Raum (32) zugewandten Seite ineinander greiffähige Schnappvorsprünge (36; 37) aufweist.

11. Vorrichtung nach einem der Ansprüche 3 bis 10, wobei der Rahmen mit einer Aussparung (38) versehen ist, in welcher der Deckel (4) aufnehmbar ist.

12. Vorrichtung nach einem der Ansprüche 3 bis 11, wobei der Deckel (4) zur beweglichen Lagerung an dem Rahmen mit Zapfen (24) versehen ist, welche vorzugsweise in dem Raum (32) geführt sind, welcher durch das Zusammenklappen des Rahmens (4) definiert ist.

13. Vorrichtung nach Anspruch 12, wobei der Rahmen (4) an der dem durch das Zusammenklappen definierten Raum (32) zugewandten Seite (34) mit Rippen (40) versehen ist, welche Anschläge für die Zapfen (24) bilden und dadurch die gleitende Bewegung des Deckels (6) entlang des Rahmens (4) begrenzen.

14. Vorrichtung nach einem der Ansprüche 11 bis 13, wobei an dem Rahmen (4) im Bereich der Aussparung (38) für den Deckel (6) eine Abstützungseinrichtung (42) vorgesehen ist, um die Drehbewegung des Deckels (6) an dem Rahmen (4) zu begrenzen.

15. Vorrichtung nach einem der Ansprüche 1 bis 14, wobei die Verschlußeinrichtung in Form wenigstens eines Vorsprungs (26) ausgebildet ist, welcher an der Vorrichtung angeordnet und ausgelegt ist, einen feststehenden Karosserieabschnitt (K') (Bügel) zu hintergreifen.

16. Vorrichtung nach Anspruch 15, wobei der Vorsprung (26) an dem Deckel (6) ausgebildet ist und den Bügel (K') bei der gleitenden Bewegung des Deckels (6) entlang des Rahmens (4) hintergreift.

17. Vorrichtung nach einem der Ansprüche 1 bis 16, wobei die Halteeinrichtung einen Haken (28) aufweist, welcher an einem Karosserieabschnitt (K) einhakbar ist, so daß das Verkleidungsteil (2) in einer entkleidenden Stellung gehalten ist.

18. Vorrichtung nach einem der Ansprüche 3 bis 17, wobei der Rahmen (4) und der Deckel (6) im Spritzgußverfahren hergestellt sind.

19. Vorrichtung nach Anspruch 18, wobei an dem Rahmen (4) ein Filmscharnier (44) ausgebildet ist, mittels wessen der Rahmen (4) klappbar ist.

20. Vorrichtung nach Anspruch 19, wobei der Rahmen (4) und der Deckel (6) vormontiert lieferbar sind, wobei der Rahmen (4) sich im aufgeklappten Zustand befindet und der Deckel (6) sich unverlierbar an dem Rahmen (4) mittels der Zapfen (24), der Abstützeinrichtung (42) und der Schnappnase (22) abstützt.

## Claims

1. Fastening/-retaining device (1; 1') for a covering part (2; 2') of a motor vehicle, having
- a fastening arrangement (10) by means of which the covering part (2) can be secured in a covering position on a body section (K) of the motor vehicle, and
- a retaining arrangement (12) by means of which the covering part (2) can be retained in an uncovering position, in particular a position raised up from a body section (K) of the motor vehicle.

2. Device according to Claim 1, the device furthermore having a gripping arrangement (20) by means of which the fastening arrangement (10) and/or the retaining arrangement can be operated.

3. Device according to Claim 1 or 2, the device having two elements (4; 6)
- of which a first element (4) (frame) can be secured on the covering part (2; 2'), and
- of which the second element (6) (cover) can be mounted movably on the frame (4).

4. Device according to Claim 3, the cover (6) being provided with the gripping arrangement, preferably in the form of at least one cutout (20).

5. Device according to Claim 3 or 4, the retaining arrangement (12) being constructed on the cover (6) in such a manner that the latter can be connected to a body section (K).

6. Device according to one of Claims 3 to 5, it being possible for the two elements (4, 6) to be locked together.

7. Device according to Claim 6, the cover (6) being mounted on the frame (4) in a rotatable and slidable manner, and as it slides along the frame (4) being locked thereto or unlocked therefrom.

8. Device according to Claim 7, there being provided on the cover (6) a snap-in lug (22) which in the locking position snaps in at a section (30) of the frame (4).

9. Device according to one of Claims 3 to 8, the frame (4) being produced from a flat, foldable piece of material and, for securing on the covering part (K; K'), being folded onto the latter.

10. Device according to Claim 9, the frame (4) having, on that side which faces the space (32) defined by the folding-together operation, snap-in projections (36; 37) which are capable of gripping in one another.

11. Device according to one of Claims 3 to 10, the frame being provided with a recess (38) in which the cover (4) can be accommodated.

12. Device according to one of Claims 3 to 11, the cover (4) being provided, for the movable mounting on the frame, with pegs (24) which are preferably guided in the space (32) which is defined by the folding-together operation of the frame (4).

13. Device according to Claim 12, the frame (4) being provided, on that side (34) which faces the space (32) defined by the folding-together operation, with ribs (40) which form stops for the pegs (24) and thereby limit the sliding movement of the cover (6) along the frame (4).

14. Device according to one of Claims 11 to 13, there being provided on the frame (4), in the region of the recess (38) for the cover (6), a supporting arrangement (42) in order to limit the rotary movement of the cover (6) on the frame (4).

15. Device according to one of Claims 1 to 14, the fastening arrangement being designed in the form of at least one projection (26) which is arranged on the device and is configured to engage behind a fixed body section (K') (hoop).

16. Device according to Claim 15, the projection (26) being constructed on the cover (6) and engaging behind the hoop (K') as the cover (6) slides along the frame (4).

17. Device according to one of Claims 1 to 16, the retaining arrangement having a hook (28) which can be hooked onto a body section (K) so that the covering part (2) is retained in an uncovering position.

18. Device according to one of Claims 3 to 17, the frame (4) and the cover (6) being produced by injection moulding.

19. Device according to Claim 18, there being constructed on the frame (4) a film hinge (44) by means of which the frame (4) can be folded.

20. Device according to Claim 19, it being possible for the frame (4) and the cover (6) to be supplied preassembled, the frame (4) being in the unfolded state and the cover (6) being supported captively on the frame (4) by means of the pegs (24), the supporting arrangement (42) and the snap-in lug (22).

## Revendications

1. Dispositif de maintien et de fermeture (1 ; 1') destiné à une pièce d'habillage (2 ; 2') d'un véhicule automobile, comportant
un dispositif de fermeture (10), au moyen duquel la pièce d'habillage (2) peut être fixée en position d'habillage sur une partie (K) de carrosserie du véhicule automobile, et
un dispositif de maintien (12), au moyen duquel la pièce d'habillage (2) peut être maintenue dans une position d'attente, en particulier dans une position dans laquelle elle est retirée d'une partie (K) de carrosserie du véhicule.

2. Dispositif selon la revendication 1, qui présente, en outre, un dispositif de saisie (20) au moyen duquel peuvent être actionnés le dispositif de fermeture (10) et/ou le dispositif de maintien.

3. Dispositif selon la revendication 1 ou 2, dans lequel le dispositif présente deux éléments (4 ; 6),
dont un premier élément (4), (cadre) peut être fixé sur la pièce d'habillage (2 ; 2'),
et dont le deuxième élément (6) (couvercle) est monté sur le cadre (4) de façon à pouvoir être déplace.

4. Dispositif selon la revendication 3, dans lequel le couvercle (6) est muni du dispositif de saisie, se présentant de préférence sous la forme d'au moins un évidement (20).

5. Dispositif selon la revendication 3 ou 4, dans lequel le dispositif de maintien (12) est situé sur le couvercle (6) et conformé de façon telle que celui-ci peut être relié à une partie (K) de carrosserie.

6. Dispositif selon l'une des revendications 3 à 5, dans lequel les deux éléments (4 ; 6) peuvent être verrouillés l'un avec l'autre.

7. Dispositif selon la revendication 6, dans lequel le couvercle (6) est monté sur le cadre (4) de façon à pouvoir tourner et glisser et est verrouillé avec le cadre (4), ou déverrouillé d'avec celui-ci par un déplacement glissant le long de celui-ci.

8. Dispositif selon la revendication 7, dans lequel une dent d'encliquetage (22) est prévue sur le couvercle (6), laquelle dent, en position de verrouillage, s'encliquète sur une partie (30) du cadre (4).

9. Dispositif selon l'une quelconque des revendications 3 à 8, dans lequel le cadre (4) est fabriqué à partir d'un morceau plat de matériau rabattable et est rabattu sur la pièce d'habillage (K ; K') pour sa fixation sur celle-ci.

10. Dispositif selon la revendication 9, dans lequel le cadre (4) présente sur le côté orienté vers l'espace (32) défini lorsqu'il est à l'état rabattu, des saillies d'encliquetage (36 ; 37) susceptibles de s'accrocher l'une dans l'autre.

11. Dispositif selon l'une quelconque des revendications 3 à 10, dans lequel le cadre est muni d'une encoche (38) dans lequel le couvercle (4) peut être reçu.

12. Dispositif selon l'une quelconque des revendications 3 à 11, dans lequel le couvercle (4) est muni de tourillons (24) en vue de son montage mobile sur le cadre, lesquels tourillons passent de préférence dans l'espace (32) qui est défini lorsque le cadre (4) est à l'état rabattu.

13. Dispositif selon la revendication 12, dans lequel le cadre (4) est muni, du côté (34) orienté vers l'espace (32) défini lorsqu'il est à l'état rabattu, de nervures (40) qui constituent des butées pour les tourillons (24) et qui, de ce fait, limitent le déplacement par glissement du couvercle (6) le long du cadre (4).

14. Dispositif selon l'une quelconque des revendications 11 à 13, dans lequel il est prévu pour le couvercle (6), sur le cadre (4), dans la zone de l'encoche (38), un dispositif d'appui (42), afin de (imiter le mouvement de rotation du couvercle (6) sur le cadre (4).

15. Dispositif selon l'une quelconque des revendications 1 à 14, dans lequel le dispositif de fermeture se présente sous la forme d'au moins une saillie (26) qui est disposée sur le dispositif et qui est conçue pour saisir par l'arrière une partie fixe (K') de carrosserie (étrier).

16. Dispositif selon la revendication 15, dans lequel la saillie (26) est réalisée sur le couvercle (6) et saisit l'étrier (K') par derrière lors du déplacement glissant du couvercle (6) le long du cadre (4).

17. Dispositif selon l'une quelconque des revendications 1 à 16, dans lequel le dispositif de maintien présente un crochet (28) qui peut être accroché à une partie (K) de carrosserie, de façon telle que la pièce d'habillage (2) est maintenue dans une position d'attente.

18. Dispositif selon l'une des revendications 3 à 17, dans lequel le cadre (4) et le couvercle (6) sont fabriqués selon le procédé de moulage par injection.

19. Dispositif selon la revendication 18, dans lequel le cadre (4) a une conformation de charnière du type feuille mince (44), au moyen de laquelle le cadre (4) peut être rabattu.

20. Dispositif selon la revendication 19, dans lequel le cadre (4) et le couvercle (6) peuvent être livrés prémontés, le cadre (4) se trouvant à l'état rabattu et le couvercle (6) étant en appui sur le cadre (4) au moyen de tourillons (24), du dispositif d'appui (42) et de la dent d'encliquetage (22), de façon à ne pas pouvoir être perdu.
